# EUROPÄISCHE PATENTSCHRIFT

(11) **EP 1 213 206 B1**
(45) Veröffentlichungstag und Bekanntmachung des Hinweises auf die Patenterteilung: **07.06.2006**
(21) Anmeldenummer: 01128782.8
(22) Anmeldetag: 04.12.2001
(51) Int. Cl.: B62D 7/20, B62D 7/16

(54) **Lenkvorrichtung für lenkbare Vorderräder**
Steering arrangement for steerable front wheels
Dispositif de direction pour roues avant dirigeables

(30) Priorität: 09.12.2000 DE 10061408
(43) Veröffentlichungstag der Anmeldung: 12.06.2002
(60) Teilanmeldung: 05009650.2
(73) Patentinhaber: ZF FRIEDRICHSHAFEN Aktiengesellschaft, 88038 Friedrichshafen (DE)
(72) Erfinder: Eickhoff, Mathias, 94081 Fürstenzell (DE)

(56) Entgegenhaltungen:
- DE-A- 2 945 800
- DE-A- 19 619 189
- PATENT ABSTRACTS OF JAPAN vol. 1998, no. 01, 30. Januar 1998 (1998-01-30) & JP 09 226614 A (KOMATSU FORKLIFT CO LTD), 2. September 1997 (1997-09-02)

## Beschreibung

Die Erfindung betrifft eine Lenkvorrichtung für lenkbare Vorderräder nach der im Oberbegriff von Anspruch 1 näher definierten Art.

Derartige Lenkvorrichtungen werden vorzugsweise in schweren Nutzkraftfahrzeugen, wie z. B. Lastkraftwagen oder Omnibussen, eingesetzt, wobei aufgrund der hohen Lenkkräfte keine Zahnstangenlenkungen, sondern Schraubengetriebe, verwendet werden. Für Lastkraftwagen mit kurzem vorderen Überhang werden vorzugsweise Starrachsen verwendet, wobei die Schubstange direkt auf den hinteren Lenkhebel wirkt. Reisebusse verwenden eine Einzelradaufhängung, welche aufgrund der längs angeordneten Schubstange einen langen Überhang benötigen.

In der EP 0 806 310 A2 und der DE 196 19 189 A1 ist eine Lenkvorrichtung für ein Nutzkraftfahrzeug offenbart, bei welchem ein Hebelarm, welcher von einem Schraubengetriebe angetrieben wird, auf eine Schubstange wirkt, welche über einen Lenkzwischenhebel, eine Spurstange und einen Lenkhebel auf den Achsschenkel des Vorderrades wirkt. Die Schubstange ist in Fahrzeugrichtung angeordnet, wodurch bei Verwendung dieser Lenkvorrichtung das Nutzfahrzeug einen langen vorderen Überhang benötigt.

In der EP 0 278 095 B1 ist eine Lenkvorrichtung für lenkbare Hinterräder beschrieben, bei welcher die Schubstange über Lenkzwischenhebel auf einen unteren Querlenker des Hinterrades wirkt und somit einen Lenkeinschlag der Hinterräder ermöglicht. Indem der Lenkzwischenhebel auf einen Querlenker wirkt, können nur geringe Lenkeinschläge realisiert werden. Die verwendete Zahnstangenlenkung, welche auf die Schubstange wirkt, ist für die Verwendung im Nutzfahrzeug nicht geeignet, da die dort auftretenden Lenkkräfte nicht bewältigt werden können.

Die Veröffentlichung von Reimpell, Jörnsen, Fahrwerkstechnik/Jörnsen Reimpell. - Würzburg: Vogel (Vogel-Fachbuch: Technik: Kraftfahrzeugwesen) Seite 130, Bild 3.5/2 offenbart eine Lenkvorrichtung für lenkbare Vorderräder bei welchem ein Lenkgetriebe eine quer zur Fahrtrichtung vor einer Drehachse der Vorderräder angeordneten Schubstange verschiebt, welche mit einem Lenkhebel verbunden ist, welcher über eine Spurstange welche hinter der Drehachse der Vorderräder liegt, mit dem Lenkhebel des anderen Fahrzeugrades verbunden ist.

Der vorliegenden Erfindung liegt die Aufgabe zugrunde, eine Lenkvorrichtung für lenkbare Vorderräder zu schaffen, welche in einem Nutzfahrzeug mit einer Einzelradaufhängung und kurzem vorderen Überhang verwendet werden kann.

Die Aufgabe wird mit einer, auch die kennzeichnenden Merkmale des Hauptanspruchs aufweisenden, gattungsgemäßen Lenkvorrichtung für lenkbare Vorderräder gelöst.

Erfindungsgemäß ist das Schraubengetriebe vor der Drehachse der Vorderräder so angeordnet, daß die Schubstange im wesentlichen quer zur Fahrtrichtung angeordnet ist. Das Schraubengetriebe der Lenkvorrichtung wirkt über einen Hebelarm auf die Schubstange, welche auf den Lenkzwischenhebel wirkt, welcher dem Schraubengetriebe weiter entfernt angeordnet ist. Jedes Vorderrad ist über einen Lenkhebel und eine Spurstange mit einem Lenkzwischenhebel verbunden und die Lenkzwischenhebel sind über eine Spurstange miteinander verbunden. Das Schraubengetriebe ist so angeordnet, daß der Hebelarm des Schraubengetriebes im wesentlichen quer zur Fahrtrichtung drehbar ist. Das Schraubengetriebe sowie die Schubstange sind vor der Drehachse der Vorderräder angeordnet. Die Querlenker sowie die Spurstangen sind in Fahrzeugrichtung nacheinander angeordnet. Indem die Schubstange quer zur Fahrtrichtung angeordnet und der Hebelarm des Schraubengetriebes im wesentlichen quer zur Fahrtrichtung drehbar ist, kann die Lenkvorrichtung für Nutzfahrzeuge mit kurzem vorderen Überhang verwendet werden. Indem die Querlenker und die Spurstangen sich nicht kreuzen, ist ausreichend Freigang zwischen den Vorderrädern vorhanden. Indem die Schubstange einerseits am Hebelarm des Schraubengetriebes und andererseits an dem Lenkzwischenhebel angeordnet ist, welcher dem Schraubengetriebe weiter entfernt angeordnet ist, kann die Schubstange mit ausreichender Länge ausgeführt werden. Der Lenkhebel ist mit einem Achsschenkel verbunden, welcher die Radkräfte aufnimmt.

Der Achsschenkel ist vorzugsweise über obere und untere Querlenker mit dem Fahrzeugchassis verbunden. Somit ist es möglich, die Stoßstange direkt vor den Vorderrädern anzuordnen.

Weitere Merkmale sind der Figuren-Beschreibung zu entnehmen.
Es zeigen:

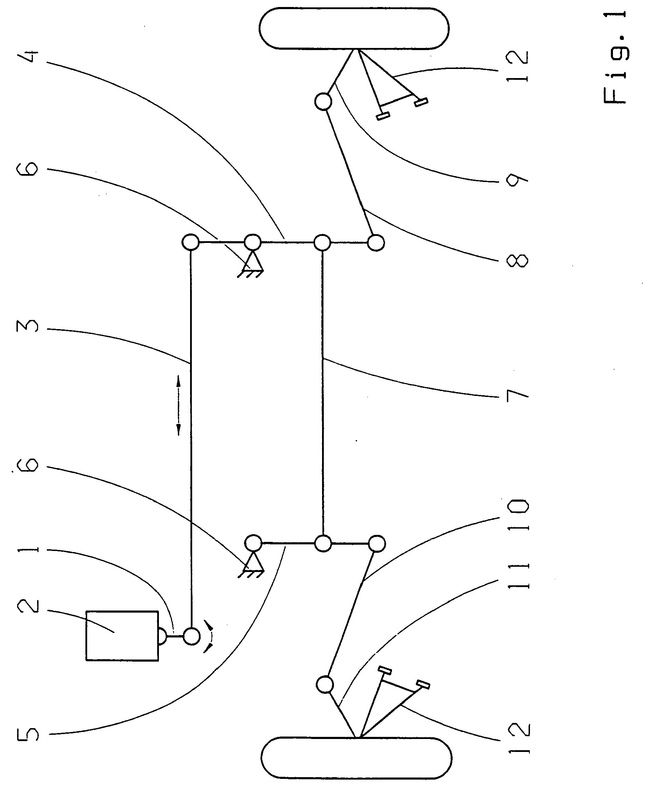

- Fig. 1: eine schematische Darstellung einer Lenkvorrichtung für lenkbare Vorderräder eines Kraftfahrzeuges;

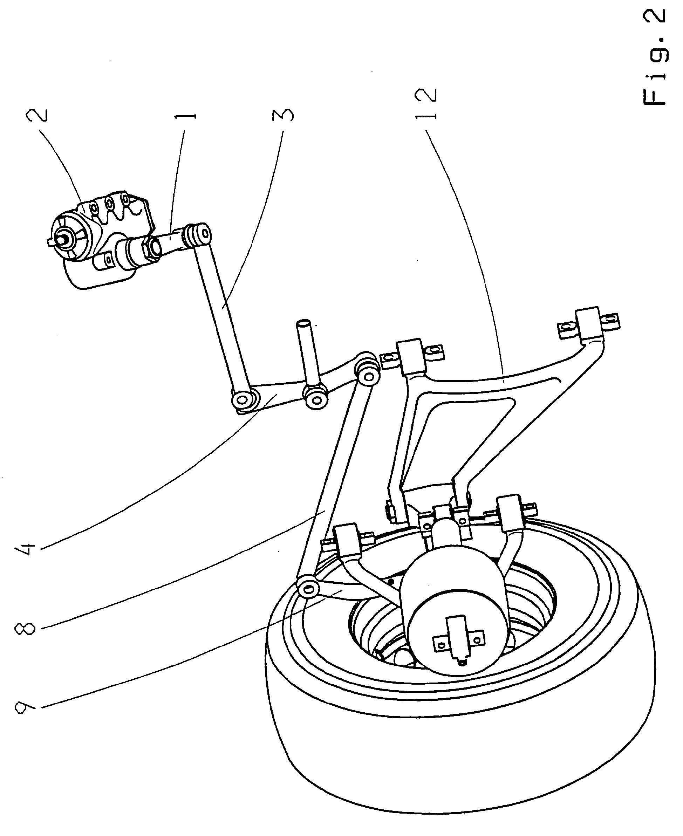

- Fig. 2: eine räumliche Darstellung der Lenkvorrichtung eines Vorderrades und

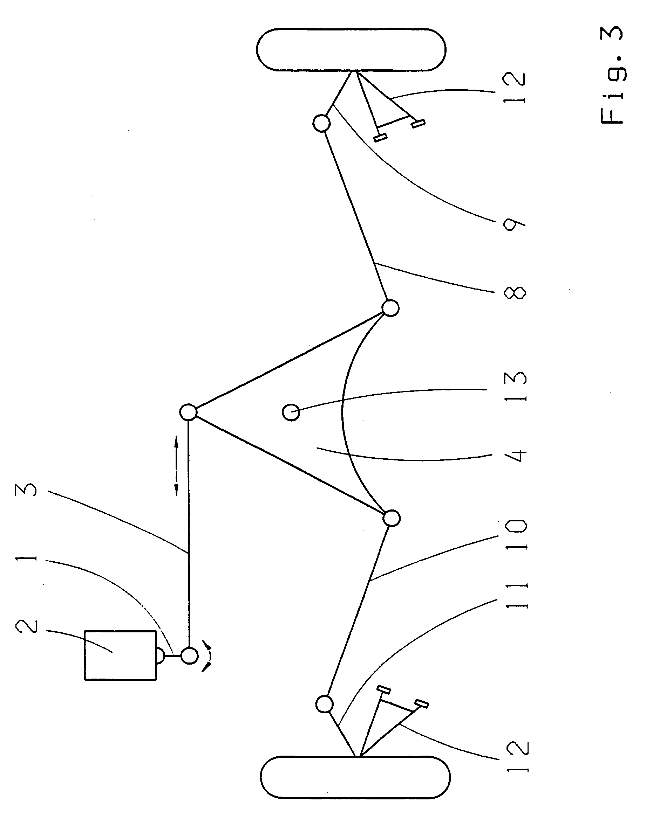

- Fig. 3: eine schematische Darstellung einer Lenkvorrichtung für lenkbare Vorderräder eines Kraftfahrzeuges.

Fig. 1:
   Der Hebelarm 1 eines Schraubengetriebes 2 ist im wesentlichen quer zur Fahrtrichtung drehbar angeordnet. Die Schubstange 3 ist einerseits mit dem Hebelarm 1 und andererseits mit einem Lenkzwischenhebel 4 verbunden. Der Lenkzwischenhebel 4 ist ortsfest, jedoch drehbeweglich, mit dem Fahrzeugchassis 6 verbunden. Die Spurstange 7 verbindet den Lenkzwischenhebel 4 mit dem Lenkzwischenhebel 5. Die Spurstange 8 ist mit dem Lenkzwischenhebel 4 und dem Lenkhebel 9 verbunden. Der Lenkhebel 9 ist mit einem nicht dargestellten Achsschenkel verbunden. Der Lenkzwischenhebel 5 ist einerseits mit dem Fahrzeugchassis 6 und mit der Spurstange 7 und andererseits mit der Spurstange 10 verbunden. Die Spurstange 10 ist über den Lenkhebel 11 mit einem nicht dargestellten Achsschenkel verbunden. Indem die Schubstange 3 im wesentlichen quer zur Fahrtrichtung angeordnet und mit dem Hebelarm 1 und dem Lenkzwischenhebel 4 verbunden und der Hebelarm 1 im wesentlichen quer zur Fahrtrichtung drehbar ist, kann die Lenkvorrichtung für Nutzkraftfahrzeuge mit kurzem vorderen Überhang verwendet werden. Indem sich die Spurstangen 8 und 10 sowie die Lenkhebel 9 und 11 nicht mit den unteren Querlenkern 12 kreuzen, ist ausreichend Freigang zum Motortunnel vorhanden.
Fig. 2:
   Der Hebelarm 1 des Schraubengetriebes 2 ist mit der Schubstange 3 verbunden. Die Schubstange 3 ist über den Lenkzwischenhebel 4 und die Spurstange 8 mit dem Lenkhebel 9 verbunden. Der Lenkhebel 9 sowie die Spurstange 8 sind in Fahrtrichtung vor dem Querlenker 12 angeordnet, so daß, da sich der Querlenker 12 und die Spurstange 8 nicht kreuzen, ausreichend Freigang zwischen den Vorderrädern vorhanden ist.
Fig. 3:
   Der Hebelarm 1 eines Schraubengetriebes 2 ist im wesentlichen quer zur Fahrtrichtung drehbar angeordnet. Die Schubstange 3 ist einerseits mit dem Hebelarm 1 und andererseits mit einem Lenkzwischenhebel 4 verbunden. Der Lenkzwischenhebel 4 ist ortsfest, jedoch drehbeweglich, mit dem Fahrzeugchassis 6 verbunden. Der Lenkzwischenhebel 4 weist einen Drehpunkt 13 auf, welcher mittig angeordnet ist und um welchen sich der Lenkzwischenhebel 4 drehen kann. Die Spurstange 8 verbindet den Lenkzwischenhebel 4 mit dem Lenkhebel 9. Die Spurstange 10 verbindet den Lenkzwischenhebel 4 mit dem Lenkhebel 11. Der Lenkhebel 10 und der Lenkhebel 11 sind mit nicht dargestellten Achsschenkeln verbunden.

### Bezugszeichen

- 1: Hebelarm
- 2: Schraubengetriebe
- 3: Schubstange
- 4: Lenkzwischenhebel
- 5: Lenkzwischenhebel
- 6: Fahrzeugchassis
- 7: Spurstange
- 8: Spurstange
- 9: Lenkhebel
- 10: Spurstange
- 11: Lenkhebel
- 12: Querlenker
- 13: Drehpunkt

## Patentansprüche

1. Lenkvorrichtung für lenkbare Vorderräder eines Kraftfahrzeuges mit einem Schraubengetriebe (2), welches über einen Hebelarm (1) auf eine Schubstange (3) und diese auf einen Lenkzwischenhebel (4) wirkt, welcher über eine Spurstange (8) auf einen Lenkhebel wirkt, welcher mit einem Achsschenkel eines Vorderrades verbunden ist, wobei die Achsschenkelträger über untere und obere Querlenker mit dem Kraftfahrzeug verbunden sind, wobei jedes Vorderrad über seinen Achsschenkel und seinen Lenkhebel (9, 11) und seine Spurstange (8, 10) mit einem Lenkzwischenhebel (4, 5) verbunden ist, wobei die Lenkzwischenhebel (4, 5) über eine Spurstange (7) miteinander verbunden sind, **dadurch gekennzeichnet, daß** die Schubstange (3) im wesentlichen quer zur Fahrtrichtung vor einer Drehachse der Vorderräder angeordnet und einerseits mit dem Hebelarm (1) des Schraubengetriebes (2) und andererseits mit dem vom Schraubengetriebe (2) weiter entfernt angeordneten Lenkzwischenhebel (4) verbunden ist, wobei die unteren Querlenker (12) vor oder nach den Spurstangen (8, 10) angeordnet sind wobei die Querlenker sowie die Spurstangen in Fahrzeugrichtung nach ein under angeordnet sind.

2. Lenkvorrichtung für lenkbare Vorderräder nach Anspruch 1, **dadurch gekennzeichnet, daß** der Hebelarm (1) des Schraubengetriebes (2) im wesentlichen quer zur Fahrtrichtung drehbar ist.

3. Lenkvorrichtung für lenkbare Vorderräder nach Anspruch 1, **dadurch gekennzeichnet, daß** das Schraubengetriebe (2) vor der Drehachse der Vorderräder angeordnet ist.

## Claims

1. The invention relates to a steering gear for the steerable front wheels of a motor vehicle equipped with a helical gear (2), which via a lever arm (1) acts on a push rod (3), which in turn acts on a steering idler arm (4), which via a tie rod (8) acts on a drop arm, which is linked to a steering knuckle of a front wheel, with the steering-knuckle supports being linked to the motor vehicle via lower and upper wishbones, with each front wheel being linked to a steering idler arm (4, 5) via its steering knuckle and its drop arm (9, 11) and its tie rod (8, 10), with the steering idler arms (4, 5) being linked to each other via a tie rod (7), **characterized in that** the push rod (3) is arranged largely at right angles to the direction of travel in front of a wheel axis of the front wheels, and that it is linked on the one hand to the lever arm (1) of the helical gear (2) and on the other hand to the steering idler arm (4) arranged farther away from the helical gear (2), with the lower wishbones (12) being arranged before or after the tie rods (8, 10), with the wishbones and the tie rods being arranged in succession in the direction of travel.

2. A steering gear for steerable front wheels according to claim 1, **characterized in that** the lever arm (1) of the helical gear (2) is rotatable largely at right angles to the direction of travel.

3. A steering gear for steerable front wheels according to claim 1, **characterized in that** the helical gear (2) is arranged before the wheel axis of the front wheels.

4. A steering gear for the steerable front wheels of a motor vehicle equipped with a helical gear (2), which via a lever arm (1) acts on a push rod (3), which in turn acts on a steering idler arm (4), which via a tie rod (8) acts on a drop arm, which is linked to a steering knuckle of a front wheel, **characterized in that** each front wheel is linked to a common steering idler arm (4) via its steering knuckle and its drop arm (9, 11) and its tie rod (8, 10), with the steering idler arm (4) being directly linked to the push rod (3) and rotatable around a center of rotation, and with the push rod (3) being arranged largely at right angles to the direction of travel before a wheel axis of the front wheels and linked on the one hand to the lever arm (1) of the helical gear (2) and on the other hand to the steering idler arm (4).

## Revendications

1. Dispositif de direction pour roues avant directrices d'un véhicule automobile comprenant un mécanisme à vis (2) qui agit par l'intermédiaire d'un bras de levier (1) sur une bielle (3), celle-ci agissant sur un levier intermédiaire de direction (4) qui agit par l'intermédiaire d'une barre d'accouplement (8) sur un levier de direction qui est relié à une fusée d'une roue avant, les supports de fusées étant reliés au véhicule automobile par l'intermédiaire de bras oscillants transversaux supérieurs et inférieurs, chaque roue avant étant reliée à un levier intermédiaire de direction (4, 5) par l'intermédiaire de sa fusée, de son levier de direction (9, 11) et de sa barre d'accouplement (8, 10), les leviers intermédiaires de direction (4, 5) étant reliés entre eux par l'intermédiaire d'une barre d'accouplement (7), **caractérisé en ce que** la bielle (3) est disposée sensiblement transversalement à la direction de la marche, avant un axe de rotation des roues avant, et est reliée, d'une part, au bras de levier (1) du mécanisme à vis (2) et, d'autre part, au levier intermédiaire de direction (4) qui est plus éloigné du mécanisme à vis (2), les bras oscillants transversaux (12) étant disposés avant ou après les barres d'accouplement (8, 10), les bras oscillants transversaux ainsi que les barres d'accouplement étant disposés les uns derrière les autres dans la direction de marche du véhicule.

2. Dispositif de direction pour roues avant directrices selon la revendication 1, **caractérisé en ce que** le bras de levier (1) du mécanisme à vis (2) tourne sensiblement transversalement par rapport au sens de la marche.

3. Dispositif de direction pour roues avant directrices selon la revendication 1, **caractérisé en ce que** le mécanisme à vis (2) est disposé avant l'axe de rotation des roues avant.
